Europäisches Patentamt

European Patent Office

Office européen des brevets

(19)

(11) Publication number: **0 065 028**

**B1**

(12) **EUROPEAN PATENT SPECIFICATION**

(45) Date of publication of patent specification: **20.08.86**

(51) Int. Cl.⁴: **B 01 J 23/88, C 10 G 45/08**

(21) Application number: **81103879.3**

(22) Date of filing: **20.05.81**

(54) **Catalyst composition and process for the catalytic hydrodesulfurization or hydrodenitrogenation.**

(43) Date of publication of application:
**24.11.82 Bulletin 82/47**

(45) Publication of the grant of the patent:
**20.08.86 Bulletin 86/34**

(84) Designated Contracting States:
**BE DE FR GB IT**

(56) References cited:
**FR-A-2 153 373**
**FR-A-2 312 551**
**US-A-3 849 296**
**US-A-3 997 431**

(73) Proprietor: **PHILLIPS PETROLEUM COMPANY**
**5th and Keeler**
**Bartlesville Oklahoma 74004 (US)**

(72) Inventor: **Eastman, Alan Dan**
**3209 S.E. Wilson Road**
**Bartlesville Oklahoma (US)**
Inventor: **Gardner, Lloyd Earl**
**1620 Smysor Drive**
**Bartlesville Oklahoma (US)**

(74) Representative: **Dost, Wolfgang, Dr.rer.nat.,**
**Dipl.-Chem. et al**
**Patent- und Rechtsanwälte Bardehle-**
**Pagenberg-Dost-Altenburg & Partner Postfach**
**86 06 20**
**D-8000 München 86 (DE)**

Courier Press, Leamington Spa, England.

## Description

This invention relates to an improved catalytic process for the hydrodesulfurization (HDS) of organic sulfur compounds or the hydrodenitrogenation (HDN) of organic nitrogen compounds, and a catalyst therefor.

Hydrodesulfurization is a process intended primarily to convert the sulfur in organic sulfur compounds to hydrogen sulfide. Hydrodenitrogenation is a process intended primarily to convert the nitrogen in organic nitrogen compounds to ammonia. Hydrodesulfurization and hydrodenitrogenation will generally occur at the same time under similar process conditions if both organic sulfur compounds and organic nitrogen compounds are present in the feed stream. The hydrogen sulfide and/or ammonia can be removed from the feed stream after the hydrodesulfurization and/or hydrodenitrogenation process. Hydrodesulfurization and hydrodenitrogenation are processes which are typically utilized to remove sulfur and nitrogen from a hydrocarbon-containing feedstock which also contains organic sulfur compounds and/or organic nitrogen compounds to produce fuels which, when burned, will meet environmental standards. The processes may be applied to feed streams other than hydrocarbon-containing feeds if organic sulfur compounds and/or organic nitrogen compounds are present and the removal of sulfur and/or nitrogen is desired.

The earliest hydrodesulfurization and/or hydrodenitrogenation catalysts were bauxite and Fuller's earth. Later, catalysts containing cobalt molybdate on alumina and nickel tungstate on alumina substantially replaced the earlier catalyst and these catalysts are still used very extensively.

Both hydrodesulfurization and hydrodenitrogenation processes require substantial energy because of the elevated temperatures required and also require substantial volumes of hydrogen which is expensive. Hydrogen is required to convert the sulfur in organic sulfur compounds to hydrogen sulfide and to convert the nitrogen in organic nitrogen compounds to ammonia. If the feed stream containing the organic sulfur compounds and/or organic nitrogen compounds also contains aromatics, substantial hydrogen may be consumed in hydrogenating aromatics which is undesirable. Thus, a good hydrodesulfurization or hydrodenitrogenation catalyst is one which shows substantial activity at lower temperatures so as to require less energy and also exhibits good selectivity for the consumption of hydrogen so as to reduce the hydrogenation of aromatics if aromatics are present in the feed stream which contains the organic sulfur compounds and/or organic nitrogen compounds. The reduced hydrogenation of aromatics results in a lower consumption of hydrogen and a higher quality desulfurized and/or denitrogenized aromatic containing feedstock.

Many catalytic compositions for hydrotreating hydrocarbons containing feedstocks have been described in the art. Thus, FR—A—2 153 373 describes a catalyst containing cobalt, molybdenum and zinc on alumina.

Another reference, US—A—3 997 431, describes a catalyst obtained by impregnating alumina with ammonium paramolybdate then with nickel nitrate then with titanium tetrachloride.

There is a continued need for improved catalysts and processes for hydrotreating hydrocarbons, particularly in view of the increasing use and need for use of feedstocks with higher sulfur and nitrogen content.

It is thus an object of this invention to provide an improved hydrodesulfurization and/or hydrodenitrogenation catalyst which exhibits high activity and good selectivity to thus provide an improved process for the hydrodesulfurization and/or hydrodenitrogenation of organic compounds.

In accordance with the present invention, a supported catalyst composition comprising cobalt, molybdenum and titanium on a support of catalytic grade alumina is used, wherein the titanium is present as zinc titanate. The composition is utilized as a catalyst in a hydrodesulfurization and/or hydrodenitrogenation process. The hydrodesulfurization and/or hydrodenitrogenation process is carried out under suitable conditions. The catalyst composition exhibits substantial activity for hydrodesulfurization and/or hydrodenitrogenation and also exhibits improved selectivity for the consumption of hydrogen over the conventional cobalt molybdate on alumina catalyst. This results in a decreased hydrogenation of aromatics, where aromatics are present, which reduces the volume of hydrogen required by the hydrodesulfurization and/or hydrodenitrogenation process.

The hydrodesulfurization and/or hydrodenitrogenation process is preferably carried out in cycles consisting of a reaction period and a regeneration period for the catalyst. The reaction period comprises contacting a feedstock which contains organic sulfur compounds and/or organic nitrogen compounds with the catalyst to thereby convert the sulfur in organic sulfur compounds in the feedstock to hydrogen sulfide and also convert the nitrogen in organic nitrogen compounds to ammonia. After the reaction period, an oxygen-containing gas is passed in contact with the catalyst to regenerate the catalyst by burning off carbonaceous materials which may have formed on the catalyst.

Other objects and advantages of the invention will be apparent from the foregoing brief description of the invention and the appended claims, as well as the detailed description of the invention which follows.

Any suitable organic sulfur compound may be hydrodesulfurized in accordance with the present invention. Suitable organic sulfur compounds include sulfides, disulfides, mercaptans, thiophenes, benzothiophenes dibenzothiophenes and the like and mixtures of two or more thereof.

Any suitable organic nitrogen compound may be hydrodenitrogenized in accordance with the present invention. Suitable organic nitrogen compounds include amines, diamines, pyridines, quinolines, porphyrins, benzoquinolines and the like and mixtures of two or more thereof.

Organic sulfur compounds and/or organic nitrogen compounds contained in any suitable fluid stream may be hydrodesulfurized and/or hydrodenitrogenized in accordance with the present invention. Suitable fluid streams include light hydrocarbons such as methane, ethane, ethylene and natural gas, gases such as hydrogen and nitrogen, gaseous oxides of carbon, steam, and the inert gases such as helium and argon.

The invention is particularly directed to hydrocarbon-containing feed streams which also contain organic sulfur compounds and/or organic nitrogen compounds. Suitable hydrocarbon-containing feeds include not only those hydrocarbon containing feeds previously mentioned but also petroleum products and products from extraction and/or liquefaction of coal and lignite, products from tar sands, products from shale oil and similar products. Suitable hydrocarbons include naphtha, distillates, gas oil having a boiling range from 205° to 538°C, topped crude having a boiling range in excess of 343°C and residuum.

The hydrodesulfurization and/or hydrodenitrogenation catalyst employed in the process of the present invention is a calcined composition comprising catalytic grade alumina to which titanium, cobalt, zinc and molybdenum have been added. The titanium, cobalt, zinc and molybdenum may be present in the oxide form ($TiO_2$, $Co_3O_4$, $ZnO$, and $MoO_3$). The cobalt and molybdenum may also be present as cobalt molybdate ($CoMoO_4$). The zinc and titanium are present as zinc titanate ($Zn_2TiO_4$). Any suitable concentration of the oxides of titanium, cobalt, zinc and molybdenum may be utilized. The total concentration of the oxides of titanium, cobalt, zinc and molybdenum preferably ranges from about 3 to about 35 weight percent based on the total catalyst weight. Any suitable atomic ratio Zn:Ti or Co:Mo of zinc to titanium or cobalt to molybdenum may be utilized. The atomic ratio of zinc to titanium preferably ranges from about 1:1 to about 3:1 and will more preferably range from about 1.8:1 to about 2.2:1. The atomic ratio of cobalt to molybdenum preferably ranges from about 0.1:1 to about 3:1 and will more preferably range from about 0.6:1 to about 0.7:1. The concentration of the zinc oxide plus the titanium oxide preferably ranges from about 2 to about 25 weight percent based on the weight of the total catalyst composition and will more preferably range from about 5 to about 15 weight percent based on the weight of the total catalyst composition. The concentration of cobalt oxide plus molybdenum oxide preferably ranges from about 2 to about 25 weight percent based on the weight of the total catalyst composition and will more preferably range from about 10 to about 20 weight percent based on the weight of the total catalyst composition.

Any catalytic grade alumina known in the art can be utilized including the forms of catalytic grade alumina known as eta- or gamma-alumina.

Either the elemental form of the promoters or any suitable compound of the promoters may be used to form the catalyst composition.

Titanium compounds suitable for use as a promoter are titanyl sulfate, titanium tetra-alkoxide ($Ti(OR)_4$) where R can be ethyl, isopropyl or the like, or other soluble titanium compounds including the halides and the oxyhalides and the like and mixtures of any two or more thereof.

Cobalt compounds suitable for use as a promoter are cobalt acetate, cobalt carbonate, cobalt nitrate, cobalt oxide, cobalt sulfate, cobalt thiocyanate, and the like and mixtures of two or more thereof.

Zinc compounds suitable for use as a promoter are zinc acetate zinc nitrate, zinc carbonate, zinc sulfate, zinc oxide, and the like and mixtures of two or more thereof.

Molybdenum compounds suitable for use as a promoter are ammonium molybdate, ammonium heptamolybdate, sodium molybdate, potassium molybdate, molybdenum oxides such as molybdenum (IV) oxide and molybdenum (VI) oxide and the like and mixtures of two or more thereof.

The promoting elements can be added to the catalyst by any method known in the art. The titanium, cobalt, zinc, and molybdenum may be added individually by impregnating the alumina with a solution—aqueous or organic—that contains a promoting element. The catalytic grade alumina can be 1/32″ (0.8 mm) or larger extrudate, preferably about 1/16″ (1.6 mm) extrudate, although this is not required. After the promoting element has been added to the catalytic grade alumina, the catalyst composition is dried. For the titanium, the treated catalyst is preferably treated with a base from a Group IA element such as sodium hydroxide or potassium carbonate before drying. The catalyst composition is then washed to remove sulfates or halogens before proceeding to the drying step. After drying to remove essentially all the solvent, a solution of another promoting element is added by impregnation. These processes are repeated until all four elements have been added to the alumina. However, the treatment with a base from a Group IA element is preferably utilized only for the addition of the titanium compounds. The sequence in which the promoting elements are added is immaterial. After all the promoting elements have been added, the catalyst composition is calcined in the presence of oxygen at a temperature in the range of 500° to 650°C until volatile matter is removed and the promoting elements are substantially converted to their oxides. The time required for the calcining step may range from 0.1 to 10 hours. It is noted that cobalt molybdate on alumina is a commercially available material. If the commercially available cobalt molybdate on alumina is utilized, then only the zinc and titanium need be added to the catalyst composition.

The promoting elements can also be added to the alumina by first combining zinc and titanium to form zinc titanate. The zinc titanate is then added to the alumina in the same manner as previously described. The alumina to which zinc titanate has been added is then treated with cobalt and molybdenum, which may be in the form of cobalt molybdate, as has been previously described. After the zinc titanate, cobalt and molybdenum have been added to the alumina, the catalyst composition is again calcined in the presence of oxygen at a temperature in the range of 500°C to 650°C to convert the cobalt and molybdenum to their oxides if the cobalt and molybdenum have been added individually or in a form other than an oxide. The time required for the calcining step will again range from 0.1 to 10 hours.

The zinc titanate may be prepared by intimately mixing suitable portions of zinc oxide and titanium dioxide, preferably in a liquid such as water, and calcining the mixture in the presence of free oxygen at a temperature in the range of 650°C to 1050°C, preferably in the range of 675°C to 975°C. A calcining temperature in the range of 800°C to 850°C is most preferred because the surface area of the catalyst is maximized in this temperature range thus producing a more active catalyst. The titanium dioxide used in preparing the zinc titanate preferably has extremely fine particle size to promote intimate mixing of the oxide and titanium dioxide. This produces a rapid reaction of the zinc oxide and titanium dioxide which results in a more active catalyst. Preferably the titanium dioxide has an average particle size of less than 100 millimicrons and more preferably less than 30 millimicrons. Flame hydrolyzed titanium dioxide has extremely small particle size and is particularly preferred in preparing the catalyst.

The zinc titanate may also be prepared by coprecipitation from aqueous solutions of a zinc compound and a titanium compound. The aqueous solutions are mixed together and the hydroxides are precipitated by the addition of an alkali metal hydroxide. The precipitate is then washed, dried and calcined as described in the preceding paragraph. This method of preparation is less preferred than the mixing method because the zinc titanate prepared by the coprecipitation method is softer than the zinc titanate prepared by the mixing method.

The surface area of the catalyst increases as the catalyst becomes sulfided and reaches a maximum when the catalyst is completely sulfided. The catalyst may become sulfided during the hydrodesulfurization process or may be presulfided. The catalyst is preferably presulfided even if the catalyst is to be used only for hydrodenitrogenation. The presulfiding of the catalyst is preferred before the catalyst is initially used and after each regeneration of the catalyst. Preferably, the catalyst is presulfided in two steps. The catalyst is first treated with a mixture of hydrogen sulfide in hydrogen at a temperature in the range of 175°C to 225°C, preferably about 205°C. The temperature in the catalyst composition will rise during this first presulfiding step and the first presulfiding step is continued until the temperature rise in the catalyst has substantially stopped or until hydrogen sulfide is detected in the effluent flowing from the reactor. The mixture of hydrogen sulfide and hydrogen preferably contains in the range of 5 to 20 percent hydrogen sulfide, preferably 10 percent hydrogen sulfide.

The second step in the presulfiding process consists of repeating the first step at a temperature in the range of 350°C to 400°C, preferably about 370°C. It is noted that other mixtures containing hydrogen sulfide may be utilized to presulfide the catalyst. Also the use of hydrogen sulfide is not required. In a commercial operation, it is common to utilize a light naphtha containing sulfur to presulfide the hydrodesulfurization and/or hydrodenitrogenation catalyst.

The process of this invention can be carried out by means of any apparatus whereby there is achieved a contact with the catalyst of the organic compounds to be hydrodesulfurized and/or hydrodenitrogenized. The process is in no way limited to the use of a particular apparatus. The process of this invention can be carried out using a fixed catalyst bed, fluidized catalyst bed, or moving catalyst bed. Presently preferred is a fixed catalyst bed.

In order to avoid any casual mixing of the feed stream containing the organic sulfur compound and/or organic nitrogen compound and the oxygen-containing fluid utilized in the regeneration step, provision is preferably made for terminating the flow of feed to the reactor and injecting an inert purging fluid such as nitrogen, carbon dioxide or steam. Any suitable purge time can be utilized. The purge duration will be of sufficient length to completely remove hydrogen and hydrocarbons. Any suitable flow rate of the purge fluid may be utilized. Presently preferred is a purge fluid flow rate in the range of 800 GHSV to 1200 GHSV.

Any suitable temperature for hydrodesulfurization and/or hydrodenitrogenation of the organic sulfur compounds and/or organic nitrogen compounds over the catalyst composition of the present invention can be utilized. The temperature will generally be in a range of 205°C to 538°C and will more preferably be in the range of 316°C to 427°C for the hydrodesulfurization process and/or the hydrodenitrogenation process.

All pressures are gauge unless otherwise indicated.

Any suitable pressure for the hydrodesulfurization and/or hydrodenitrogenation of the organic sulfur compounds and/or organic nitrogen compounds over the catalyst composition of the present invention can be utilized. In general, the pressure will be in the range of 200 to 3000 psig (1.38 to 20.7 MPa) total system pressure for the hydrodesulfurization process and/or the hydrodenitrogenation process. The total system pressure is the sum of the partial pressure of the feedstock plus the partial pressure of the added hydrogen. Preferably the total system pressure will range from 400 to about 1000 psig (2.76 to 6.89) for the hydrodesulfurization process and/or the hydrodenitrogenation process.

Any suitable quantity of hydrogen can be added to the hydrodesulfurization and/or hydrodenitrogenation process. The quantity of hydrogen used to contact the feedstock containing the organic compounds being hydrodesulfurized and/or hydrodenitrogenized will be in the range from 100 to 10,000 SCF/bbl (17 to 1800 dm$^3$/ltr.) and will more preferably be in the range from 500 to 3000 SCF/bbl. (85 to 530 dm$^3$ ltr.)

Any suitable residence time for the feedstock in the presence of the catalyst composition of the present invention can be utilized. In general, the residence time in terms of the volumes of liquid per volume of catalyst per hour (LHSV) can range from 0.1 to 20 and will more preferably range from 1 to 5 for both the hydrodesulfurization process and/or the hydrodenitrogenation process.

To maintain the activity of the hydrodesulfurization and/or hydrodenitrogenation catalyst, the temperature of the hydrodesulfurization and/or hydrodenitrogenation process is gradually increased to compensate for loss of catalyst activity due to fouling of the catalyst. When the temperature of the hydrodesulfurization and/or hydrodenitrogenation process cannot conveniently be increased further, the catalyst is typically regenerated by terminating the flow of feed to the reactor and purging with an inert fluid such as nitrogen to remove combustibles and then introducing free oxygen-containing fluid to oxidize the carbonaceous deposits which have formed on the catalyst during the hydrodesulfurization and/or hydrodenitrogenation process. The catalyst will generally be utilized for a year or longer before being regenerated.

The amount of oxygen, from any source, supplied during the regeneration step will be in an amount sufficient to remove carbonaceous materials from the catalyst. The regeneration step is conducted at generally the same pressure recited for the hydrodesulfurization and/or hydrodenitrogenation step. The temperature for the regeneration step is preferably maintained in the range of 425°C to 650°C. If the hydrodesulfurization and/or hydrodenitrogenation process has been proceeding at a temperature lower than 425°C, the temperature of the catalyst should be increased to about 425°C prior to the start of the regeneration of the catalyst in order to remove any carbonaceous deposits on the catalyst within a reasonable time. After regeneration is complete the pre-sulfiding procedure is repeated for optimum catalyst activity.

The following examples are presented in further illustration of the invention.

Example I

Runs were made using a catalyst that had been prepared by mixing preformed zinc titanate with alumina, converting to an extrudate, and impregnating with cobalt and molybdenum. This catalyst, designated catalyst G, was prepared by combining 83 g of powdered zinc titanate (Zn$_2$TiO$_4$ with 500 g of Catapal alpha-alumina monohydrate (boehmite) and 3 g of methyl cellulose. These dry solids were mixed in a twin shell blender, passed three times through a Raymond hammer mill, then treated with 230 ml of 0.31 N nitric acid. After mixing in a Sigma mixer, the product was extruded from a Greenlee hydraulic extruder through a 1/16" (1.6 mm) orifice and dried in a forced draft oven at 250°F (121°C). The composition was then calcined in air in a muffle furnace at 1000°F (538°C) for several hours and the extrudates were chopped to about 5 mm lengths. The composition was then impregnated with molybdenum by being added to an excess of a solution prepared by dissolving 184 g of (NH$_4$)$_6$Mo$_7$O$_{24}$ · 4H$_2$O and 10 ml of concentrated ammonium hydroxide in sufficient water to make 500 ml of solution. After five minutes of soaking, excess solution was separated on a Buchner funnel filter. The treated catalyst was dried in an oven at 250°F (121°C) and calcined for 2 hours in air at 1000°F (538°C) in a muffle furnace. Cobalt was then added by soaking the catalyst for 15 minutes in a solution prepared by dissolving 125 g of Co(NO$_3$)$_2$ · 6H$_2$O in sufficient water to make 317 ml of solution. Excess solvent was again separated on a Buchner funnel filter and the catalyst was dried and calcined as in the preceding step.

By analysis catalyst G was found to contain 3.9 weight percent CaO, 15.5 weight percent MoO$_3$, 9.6 weight percent ZnO, 4.3 weight percent TiO$_2$, with the remainder being Al$_2$O$_3$. The atomic ratio of zinc to titanium in catalyst G was 2.19:1 while the atomic ratio of cobalt to molybdenum was 0.48:1. Its surface area was 145 m$^2$/g.

Catalyst G was used to hydrodesulfurize and hydrodenitrogenize a blend of distillate plus cycle oil, referred to hereinafter as feedstock, that contained 0.75 weight percent organic sulfur and 221 ppm (by weight) organic nitrogen. Runs were made in an automated test unit capable of testing six catalysts simultaneously. Six reactors 1" (25 mm) o.d.×0.813" (19.6 mm) i.d. and made of 316 stainless steel were disposed symmetrically in a single furnace. The reactors operated with a fixed catalyst bed in down-flow mode. Feedstock preheat lines ran unflow through the furnace, entering the tops of the reactors where the feedstock was mixed with added hydrogen. Conditions in the reactors were mixed phase, i.e., trickle bed process. Runs were made with 25 cc of catalyst, or with 5 cc of catalyst plus 20 cc of inert diluent (corundum). Contact time of feedstock with catalyst, in terms of volume of feedstock per volume of catalyst per hour (LHSV) was varied by either varying the feedstock pump setting or by the use of diluted catalyst.

The procedure followed to evaluate a catalyst was to first make a temperature survey. After presulfiding with 10 percent hydrogen sulfide in hydrogen, first at 204°C until hydrogen sulfide was detected in the effluent flowing from the reactor, then at 372°C until hydrogen sulfide was detected in the effluent flowing from the reactor, the catalyst was used to hydrodesulfurize and hydrodenitrogenize the feed at 750°F (399°C), 800°F (427°C), 600°F (316°C), 650°F (343°C), 700°F (371°C), and 750°F (399°C). Comparison of the first and last tests indicated changes in activity during the survey. Following the completion of the temperature survey, the catalyst was regenerated with free oxygen-containing gas and again presulfided at 204°C and 372°C with 10 percent hydrogen sulfide in hydrogen.

All runs were made at 5.0 LHSV, 500 psig (3.45 M) with 500 SCF hydrogen/bbl feed (89 dm³/ltr). Comparative runs wers also made using American Cyanamid HDS-20A catalyst, a state of the art hydrodesulfurization catalyst, at nearly identical conditions. The latter, designated catalyst H, comprised 4.95 weight percent CaO and 15.9 weight percent $MoO_3$ with the balance being $Al_2O_3$. Its surface area was 241 m²/g. A 20+40 mesh size fraction of each catalyst was used for the comparative runs.

Table I summarizes pertinent results from these runs, made at five different temperatures in the range 550—750°F (288—399°C). Except for the two lowest temperatures where the commercial catalyst exhibited more hydrodesulfurization activity the two catalysts showed essentially identical hydrodesulfurization activity despite the fact that the commercial catalyst possessed a much higher surface area. At all temperatures hydrogen consumption by inventive catalyst G was significantly less than for the commercial catalyst. This is also reflected in the properties of the product—that from catalyst G having consistently lower saturated/aromatics ratio and consistently higher concentration of poly-aromatics (determined by mass spectrometry), indicating a lower consumption of hydrogen via hydrogenation of the hydrocarbon.

TABLE I

| Catalyst | G | G | G | G | G | H | H | H | H | H |
|---|---|---|---|---|---|---|---|---|---|---|
| Run | 28 | 29 | 30 | 31 | 32 | 33 | 34 | 35 | 36 | 37 |
| Temperature, °F(°C) | 548 (287) | 602 (317) | 651 (344) | 701 (372) | 750 (399) | 557 (292) | 660 (349) | 650 (343) | 707 (375) | 749 (398) |
| Hydrodesulfurization, wt. %* | 61.3 | 83.6 | 92.3 | 95.6 | 96.4 | 80.1 | 88.3 | 93.0 | 95.5 | 97.0 |
| $H_2$ Composition, SCF/bbl ($dm^3$/ltr) | 132 (23.5) | 161 (28.7) | 227 (40.4) | 190 (33.8) | 181 (32.2) | 163 (29) | 196 (34.9) | 246 (43.8) | 245 (43.6) | 197 (35.1) |
| Product S, wt. % | 0.271 | 0.115 | 0.054 | 0.031 | 0.025 | 0.141 | 0.083 | 0.050 | 0.032 | 0.021 |
| Saturation/Aromatics, wt. | 1.12 | 1.43 | 1.86 | 2.04 | 1.58 | 1.38 | 1.63 | 2.37 | 2.05 | 1.70 |
| Polaromatics, wt. % | 13.2 | 12.2 | 9.5 | 9.5 | 11.5 | 12.1 | 10.8 | 8.7 | 8.8 | 10.8 |

*Hydrodenitrogenation was not measured for these runs.

0 065 028

## Claims

1. A supported catalyst composition comprising cobalt, molybdenum and titanium on a support of catalytic grade alumina, characterized in that said titanium is present as zinc titanate.

2. The catalyst composition of claim 1 characterized in that said catalyst composition is prepared by calcining a mixture of zinc oxide and titanium dioxide in the presence of free oxygen at a temperature in the range of 650 to 1050°C to form zinc titanate, adding the thus formed zinc titanate to the catalytic grade alumina, adding cobalt and molybdenum to the catalytic grade alumina, and calcining the catalytic grade alumina to which zinc titanate, cobalt and molybdenum have been added in the presence of oxygen at a temperature in the range of 500 to 650°C, said cobalt and molybdenum being present in said catalyst composition in the oxide form after the calcining step.

3. The catalyst composition of claim 1 or 2 characterized in that the total concentration of zinc titanate, calculated on the oxide of zinc plus the oxide of titanium, and the oxides of cobalt and molybdenum is in the range of 3 to 35 weight percent based on the total weight of the catalyst composition.

4. The catalyst composition of any one of the preceding claims characterized in that the concentration of zinc titanate, calculated on the oxide of titanium plus the oxide of zinc is in the range of 2 to 25 weight percent, and the concentration of the cobalt oxide plus the concentration of the molybdenum oxide is in the range of 2 to 25 weight percent, each based on the weight of the total catalyst composition.

5. The catalyst composition of claim 4 characterized in that the concentration of zinc titanate, calculated on the oxide of titanium plus the oxide of zinc is in the range of 5 to 15 weight percent, and the concentration of the cobalt oxide plus the concentration of the molybdenum oxide is in the range of 10 to 20 weight percent, each based on the weight of the total catalyst composition.

6. The catalyst composition of any of the preceding claims characterized in that the atomic ratio of zinc to titanium in said catalyst composition is in the range of 1:1 to 3:1 and the atomic ratio of cobalt to molybdenum in said catalyst composition is in the range of 0.1:1 to 3:1.

7. The catalyst composition of claim 6 characterized in that the ratio of zinc to titanium in said catalyst composition is in the range of 1.8:1 to 2.2:1 and the atomic ratio of cobalt to molybdenum in said catalyst composition is in the range of 0.6:1 to 0.7:1.

8. The catalyst composition of any one of the preceding claims characterized in that said catalyst composition is completely sulfided.

9. The catalyst composition of claim 8 characterized in that said catalyst composition has been completely sulfided by contacting the catalyst composition with hydrogen sulfide at a temperature in the range of 175 to 225°C until hydrogen sulfide is detected in the effluent flowing from said catalyst composition and then contacting said catalyst composition with hydrogen sulfide at a temperature in the range of 350 to 400°C until hydrogen sulfide is detected in the effluent flowing from said catalyst composition.

10. A process for the catalytic hydrodesulfurization or catalytic hydrodenitrogenation of an organic sulfur or nitrogen compound comprising contacting said compound under hydrodesulfurization or hydrodenitrogenation conditions with a catalyst composition, characterized by using a catalyst composition according to any one of claims 1 to 9.

11. The process of claim 10 characterized in that said organic sulfur compound is selected from sulfides, disulfides, mercaptans, thiophenes, benothiophenes and dibenzothiophenes, and mixtures thereof, and said organic nitrogen compound is selected from amines, diamines, pyridines, quinolines, porphyrins and benzoquinolines, and mixtures thereof.

12. The process of claim 10 or 11 characterized in that said organic sulfur or nitrogen compound is contained in a fluid feed stream.

13. The process of claim 12 characterized in that said fluid feed stream contains aromatic hydrocarbons.

14. The process of any of claims 10 to 13 characterized in that said hydrodesulfurization or hydrodenitrogenation conditions comprise a temperature in the range of 205 to 538°C, a total system pressure in the range of 1.38 to 20.7 MPa, a hydrogen flow rate in the range of 0.018 to 1.77 $m^3$/liter and a residence time for said fluid feed stream in the presence of said catalyst composition in the range of 0.1 to 20 liquid volumes of said fluid feed stream per volume of said catalyst composition per hour.

15. The process of claim 14 characterized in that said hydrodesulfurization or hydrodenitrogenation conditions comprise a temperature in the range of 316 to 427°C, a total system pressure in the range of 2.75 to 6.9 MPa, a hydrogen flow rate in the range of 0.089 to 0.531 $m^3$/liter and a residence time for said fluid feed stream in the presence of said catalyst composition in the range of 1 to 5 liquid volumes of said fluid feed stream per volume of said catalyst composition per hour.

16. The process of any of claims 12 to 15 characterized by additionally comprising the steps of: discontinuing the flow of said fluid feed stream over said catalyst composition; and contacting said catalyst composition, after the flow of said fluid feed stream is discontinued, with a fee oxygen-containing fluid under regeneration conditions to thereby regenerate said catalyst composition.

17. The process of claim 16 characterized in that said regeneration conditions comprise a feed rate of said free oxygen-containing fluid suitable to remove substantially all of the carbonaceous deposits from said catalyst composition, a temperature in the range of 425 to 650°C, and a pressure in the range of 2.75 to 6.9 MPa.

18. The process of claim 16 characterized by the additionally comprising the step of purging said catalyst composition with an inert fluid after the step of terminating the flow of said fluid feed stream and before the step of regenerating said catalyst composition.

19. The process of claim 16 characterized by additionally comprising the steps of: terminating the flow of said free oxygen-containing fluid over said catalyst composition after said catalyst composition is substantially regenerated; purging said catalyst composition with an inert fluid after the flow of said free oxygen-containing fluid is terminated; terminating the flow of said inert fluid over said catalyst composition after said free oxygen-containing fluid is substantially purged from said catalyst composition; and recontacting said catalyst composition with said fluid feed stream after the flow of said inert fluid is terminated.

**Patentansprüche**

1. Trägergebundene Katalysatorzusammensetzung, die auf einem Träger von analytisch reinem Aluminiumoxid Cobalt, Molybdän und Titan enthält, dadurch gekennzeichnet, daß das Titan als Zinktitanat vorliegt.

2. Katalysatorzusammensetzung nach Anspruch 1, gekennzeichnet durch die Herstellung der Katalysatorzusammensetzung durch Kalzinieren eines Gemisches von Zinkoxid und Titandioxid in Anwesenheit von freiem Sauerstoff bei einer Temperatur im Bereich von 650 bis 1050°C zur Bildung von Zinktitanat; Zugabe des so gebildeten Zinktitanats zu dem analytisch reinen Aluminiumoxid; Zugabe von Cobalt und Molybdän zu dem analytisch reinen Aluminiumoxid und Kalzinieren des katalytisch reinen Aluminiumoxids, zu dem Zinktitanat, Cobalt und Molybdän gegeben wurden, in der Anwesenheit von Sauerstoff bei einer Temperatur im Bereich von 500 bis 650°C, wobei das Cobalt und das Molybdän in der Katalysatorzusammensetzung nach dem Kalzinierungsschritt in der Oxidform vorliegen.

3. Katalysatorzusammensetzung nach Anspruch 1 oder 2, dadurch gekennzeichnet, daß die Gesamtkonzentration aus Zinktitanat, berechnet aus dem Oxid des Zinks plus dem Oxid des Titans, und den Oxiden von Cobalt und Molybdän im Bereich von 3 bis 35 Gew.-%, bezogen auf das Gesamtgewicht der Katalysatorzusammensetzung, liegt.

4. Katalysatorzusammensetzung nach einem der vorhergehenden Ansprüche, dadurch gekennzeichnet, daß die Konzentration an Zinktitanat, berechnet aus dem Oxid des Titans plus dem Oxid des Zinks, im Bereich von 2 bis 25 Gew.-%, und die Konzentration des Cobaltoxids plus der Konzentration des Molybdänoxids im Bereich von 2 bis 25 Gew.-%, jeweils bezogen auf das Gewicht der Gesamt-Katalysatorzusammensetzung, liegen.

5. Katalysatorzusammensetzung nach Anspruch 4, dadurch gekennzeichnet, daß die Konzentration an Zinktitanat, berechnet aus dem Oxid des Titanu plus dem Oxid des Zinks, im Bereich von 5 bis 15 Gew.-%, und die Konzentration des Cobaltoxids plus der Konzentration des Molybdänoxids im Bereich von 10 bis 20 Gew.-%, jeweils bezogen auf das Gewicht der Gesamt-Katalysatorzusammensetzung, liegen.

6. Katalysatorzusammensetzung nach einem der vorhergehenden Ansprüche, gekennzeichnet durch ein Atomverhältnis von Zink zu Titan in der Katalysatorzusammensetzung im Bereich von 1:1 bis 3:1 und durch ein Atomverhältnis von Cobalt zu Molybdän in der Katalysatorzusammensetzung im Bereich von 0,1:1 bis 3:1.

7. Katalysatorzusammensetzung nach Anspruch 6, dadurch gekennzeichnet, daß das Verhältnis von Zink zu Titan in der Katalysatorzusammensetzung im Bereich von 1,8:1 bis 2,2:1 und daß das Atomverältnis von Cobalt zu Molybdän in der Katalysatorzusammensetzung im Bereich von 0,6:1 bis 0,7:1 liegt.

8. Katalysatorzusammensetzung nach einem der vorhergehenden Ansprüche, dadurch gekennzeichnet, daß die Katalysatorzusammensetzung vollständig sulfidiert ist.

9. Katalysatorzusammensetzung nach Anspruch 8, dadurch gekennzeichnet, daß die vollständige Sulfidierung durchgeführt wird durch Inkontaktbringen der Katalysatorzusammensetzung mit Wasserstoffsulfid bei einer Temperatur im Bereich von 175 bis 225°C, bis in dem aus der Katalysatorzusammensetzung abfließenden Abfluß Wasserstoffsulfid nachgewiesen wird, und dann durch Inkontaktbringen der Katalysatorzusammensetzung mit Wasserstoffsulfid bei einer Temperatur im Bereich von 350 bis 400°C, bis in dem aus der Katalysatorzusammensetzung abfließenden Abfluß Wasserstoffsulfid nachgewiesen wird.

10. Verfahren zur katalytischen Hydrodesulfurierung oder zur katalytischen Hydrodenitrogenierung einer organische Schwefel- oder Stickstoffverbindung unter Inkontatbringen dieser Verbindung unter Hydrodesulfurierungs- oder Hydrodenitrogenierungsbedingungen mit einer Katalysatorzusammensetzung, gekennzeichnet durch die Verwendung einer Katalysatorzusammensetzung nach einem der Ansprüche 1 bis 9.

11. Verfahren nach Anspruch 10, dadurch gekennzeichnet, daß die organische Schwefelverbindung aus Sulfiden, Disulfiden, Mercaptanen, Thiophenen, Benzothiophenen und Dibenzothiophenen und Gemischen daraus ausgewählt wird, und daß die organische Stickstoffverbindung aus Aminen, Diaminen, Pyridinen, Quinolinen, Porphyrinen und Benzoquinolinen und Gemischen daraus ausgewählt wird.

12. Verfahren nach Anspruch 10 oder 11, dadurch gekennzeichnet, daß die organische Schwefel- oder Stickstoffverbindung in einem fluiden Beschickungensstrom enthalten ist.

13. Verfahren nach Anspruch 12, dadurch gekennzeichnet, daß der fluiden Beschickungsstrom aromatische Kohlenwasserstoffe enthält.

14. Verfahren nach einem der Ansprüche 10 bis 13, gekennzeichnet durch Hydrodesulfurierungs- oder Hydrodenitrogenierungsbedingungen mit einer Temperatur im Bereich von 205 bis 538°C, einem Gesamtsystemdruck im Bereich von 1,38 bis 20,7 MPa, einer Wasserstoffflußrate im Bereich von 0,018 bis 1,77 m³/l und einer Verweilzeit des fluiden Beschickungsstromes in der Anwesenheit der Katalysatorzusammensetzung im Bereich von 0,1 bis 20 Flüssigkeitsvolumina des fluiden Beschickungsstromes pro Volumen der Katalysatorzusammensetzung pro Stunde.

15. Verfahren nach Anspruch 14, gekennzeichnet durch Hydrodesulfurierungs- oder Hydrodenitrogenierungsbedingungen mit einer Temperatur im Bereich von 316 bis 427°C, einem Gesamtsystemdruck im Bereich von 2,75 bis 6,9 MPa, einer Wasserstoffflußrate im Bereich von 0,089 bis 0,531 m³/l und einer Verweilzeit des fluiden Beschickungsstromes in der Anwesenheit der Katalysatorzusammensetzung im Bereich von 1 bis 5 Flüssigkeitsvolumina des fluiden Beschickungsstromes pro Volumen der Katalysatorzusammensetzung pro Stunde.

16. Verfahren nach einem der Ansprüche 12 bis 15, gekennzeichnet durch folgende zusätzliche Schritte:

Unterbrechen des Flusses des fluiden Beschickungsstromes über die Katalysatorzusammensetzung; und

Inkontaktbringen der Katalysatorzusammensetzung, nachdem der Fluß des fluiden Beschickungsstromes unterbrochen ist, mit einem freien Sauerstoff enthaltenden Fluid unter Regenerierungsbedingungen, um damit die Katalysatorzusammensetzung zu regenerieren.

17. Verfahren nach Anspruch 16, gekennzeichnet durch Regenerierungsbedingungen mit einer Beschickungsrate des freien Sauerstoff enthaltenden Fluids, die geeignet ist, im wesentlichen alle kohlenstoffhaltigen Ablagerungen aus der Katalysatorzusammensetzung zu entfernen, einer Temperatur im Bereich von 425 bis 650°C und einem Druck im Bereich von 2,75 bis 6,9 MPa.

18. Verfahren nach Anspruch 16, gekennzeichnet durch den zusätzlichen Schritt, daß man die Katalysatorzusammensetzung nach dem Schritt der Beendigung des Flusses des fluiden Beschickungsstromes und vor dem Schritt des Regenerierens der Katalysatorzusammensetzung mit einem inerten Fluid spült.

19. Verfahren nach Anspruch 16, gekennzeichnet durch folgende zusätzliche Schritte:

Beendigen des Flusses des freien Sauerstoff enthaltenden Fluids über die Katalysatorzusammensetzung, nachdem die Katalysatorzusammensetzung im wesentlichen regeneriert ist;

Spülen der Katalysatorzusammensetzung mit einem inerten Fluid, nachdem der Fluß des freien Sauerstoff enthaltenden Fluids beendigt ist;

Beendigen des Flusses des inerten Fluids über die Katalysatorzusammensetzung, nachdem das freien Sauerstoff enthaltende Fluid im wesentlichen aus der Katalysatorzusammensetzung ausgespült ist; und

erneutes Inkontaktbringen der Katalysatorzusammensetzung mit dem fluiden Beschickungsstrom, nachdem der Fluß des inerten Fluids beendigt ist.

**Revendications**

1. Composition de catalyseur sur support comprenant du cobalt, du molybdène et du titane sur un support d'alumine de qualité catalytique, caractérisée en ce que ce titane est présent sous forme de titanate de zinc.

2. Composition de catalyseur selon la revendication 1, caractérisé en ce que cette composition de catalyseur est préparée en calcinant un mélange d'oxyde de zinc et de bioxyde de titane en présence d'oxygène libre à une température dans l'intervalle de 65) à 1050°C pour former du titanate de zinc, en ajoutant le titanate de zinc ainsi formé à l'alumine de qualité catalytique, en ajoutant du cobalt et du molybdène à l'alumine de qualité catalytique, et en calcinant l'alumine de qualité catalytique à laquelle du titanate de zinc, du cobalt et du molybdène ont été ajoutés en présence d'oxygène à une température dans l'intervalle de 500 à 650°C, ce cobalt et ce molybdène étant présents dans la composition de catalyseur sous forme d'oxyde après le stade de calcination.

3. Composition de catalyseur selon les revendications 1 ou 2, caractérisée en ce que la concentration totale de titanate de zinc calculée sur l'oxyde de zinc plus l'oxyde de titane et les oxydes de cobalt et de molybdène est dans l'intervalle de 3 à 35% en poids par rapport au poids total de la composition de catalyseur.

4. Composition de catalyseur selon l'une quelconque des revendications précédentes, caractérisée en ce que la concentration du titanate de zinc, calculée sur l'oxyde de titane plus l'oxyde de zinc, est dans l'intervalle de 2 à 25% en poids et la concentration de l'oxyde de cobalt plus la concentration de l'oxyde de molybdène est dans l'intervalle de 2 à 25% en poids, chacune étant basée sur le poids de la composition totale de catalyseur.

5. Composition de catalyseur selon la revendication 4, caractérisée en ce que la concentration du titanate de zinc, calculée sur l'oxyde de titane plus l'oxyde de zinc, est dans l'intervalle de 5 à 15% en poids, et la concentration de l'oxyde de cobalt plus la concentration de l'oxyde de molybdène est dans l'intervalle de 10 à 20% en poids, chacune étant basée sur pe poids de la composition du catalyseur totale.

6. Composition de catalyseur selon l'une quelconque des revendications précédentes, caractérisée en ce que le rapport atomique du zinc au titane dans cette composition de catalyseur, est dans l'intervalle de 1:1 à 3:1, et en ce que le rapport atomique du cobalt au molybdène dans cette composition de catalyseur est dans l'intervalle de 0,1:1 à 3:1.

7. Composition de catalyseur selon la revendication 6, caractérisé en ce que le rapport du zinc au titane dans cette composition de catalyseur est dans l'intervalle de 1,8: 1 à 2,2:1 et en ce que le rapport atomique du cobalt au molybdène dans cette composition de catalyseur est dans l'intervalle de 0,6: à 0,7:1.

8. Composition de catalyseur selon l'une quelconque des revendications précédentes, caractérisée en ce que cette composition de catalyseur est complètement sulfurée.

9. Composition de catalyseur selon la revendication 8, caractérisée en ce que cette composition de catalyseur a été complètement sulfurée en mettant en contact la composition de catalyseur avec de l'hydrogène sulfuré à une température dans l'intervalle de 175 à 225°C jusqu'à ce que de l'hydrogène sulfuré soit détecté dans l'effluent s'écoulant de cette composition de catalyseur, puis en mettant en contact cette composition de catalyseur avec de l'hydrogène sulfuré à une température dans l'intervalle de 350 à 400°C jusqu'à ce que de l'hydrogène sulfuré soit détecté dans l'effluent s'écoulant de cette composition de catalyseur.

10. Procédé pour l'hydrodésulfuration catalytique ou l'hydrodésazotation catalytique d'un composé soufré ou azoté organique, consistant à mettre en contact le composé, dans des conditions d'hydrodésulfuration ou d'hydrodésazotation, avec une composition de catalyseur, caractérisé en ce qu'on utilise une composition de catalyseur suivant l'une quelconque des revendications 1 à 9.

11. Procédé selon la revendication 10, caractérisé en ce que ce composé soufré organique est choisi parmi des sulfures, des disulfures, des mercaptans, des thiophènes, des benzothiophènes et des dibenzothiophènes et des mélanges de ceux-ci, et en ce que ce composé azoté organique est choisi parmi des amines, des diamines, des pyridines, des quinoléines, des prophyrines et benzoquinoléines et des mélanges de celles-ci.

12. Procédé selon les revendications 10 ou 11, caractérisé en ce que ce composé organique soufré ou azoté est contenu dans un courant d'alimentation en fluide.

13. Procédé selon la revendication 12, caractérisé en ce que ce courant d'alimentation en fluide contient des hydrocarbures aromatiques.

14. Procédé selon l'une quelconque des revendications 10 à 13, caractérisé en ce que ces conditions d'hydrodésulfuration ou d'hydrodésazotation comprennent une température dans l'intervalle de 205 à 538°C, une pression totale du système dans l'intervalle de 1,38 à 20,7 MPa, un débit d'hydrogène dans l'intervalle de 0,018 à 1,77 m³/litre et un temps de séjour pour ce courant d'alimentation en fluide en présence de cette composition de catalyseur, dans l'intervalle de 0,1 à 20 volumes de liquides de ce courant d'alimentation en fluide par volume de cette composition de catalyseur par heure.

15. Procédé selon la revendication 14, caractérisé en ce que les conditions d'hydrodésulfuration ou d'hydrodésazotation comprennent une température dans l'intervalle de 316 à 427°C, une pression totale du système dans l'intervalle de 2,75 à 6,9 MPa, un débit d'hydrogène dans l'intervalle de 0,089 à 0,531 m³/litre et un temps de séjour pour ce courant d'alimentation en fluide en présence de cette composition de catalyseur dans l'intervalle de 1 à 5 volumes de liquide de ce courant d'alimentation en fluide par volume de cette composition de catalyseur par heure.

16. Procédé selon l'une quelconque des revendications 12 à 15, caractérisée en ce qu'il comprend en outre les stades consistant à: arrêter l'écoulement de ce courant d'alimentation en fluide sur cette composition de catalyseur; et à mettre en contact cette composition de catalyseur, après que l'écoulement de ce courant d'alimentation en fluide est arrêté, avec un fluide contenant de l'oxygène libre dans les conditions de régénération pour régénérer ainsi cette composition de catalyseur.

17. Procédé selon la revendication 16, caractérisé en ce que ces conditions de régénération comprennent un débit de fluide contenant de l'oxygène libre approprié pour éliminer la quasi-totalité des dépôts carbonés de cette composition de catalyseur, une température dans l'intervalle de 425 à 650°C et une pression dans l'intervalle de 2,75 à 6,9 MPa.

18. Procédé selon la revendication 16, caractérisé en ce qu'il comprend en outre le stade consistant à purger cette composition de catalyseur avec un fluide inerte après le stade de terminaison de l'écoulement de ce courant d'alimentation en fluide, et avant le stade de régénération de cette composition de catalyseur.

19. Procédé selon la revendication 16, caractérisé en ce qu'il comprend en outre les stades consistant à: mettre fin à l'écoulement de ce fluide contenant de l'oxygène libre sur cette composition de catalyseur après que cette composition de catalyseur est pratiquement régénéré; à purger cette composition de catalyseur avec un fluide inerte après que l'écoulement de ce fluide contenant de l'oxygène libre est terminé; à mettre fin à l'écoulement de ce fluide inerte sur cette composition de catalyseur après que ce fluide contenant de l'oxygène libre est pratiquement purgé de cette composition de catalyseur; et à remettre en contact cette composition de catalyseur avec ce courant d'alimentation en fluide après que l'écoulement de ce fluide inerte est terminé.